# EUROPEAN PATENT APPLICATION

(11) **EP 4 418 234 A1**
(43) Date of publication of application: **21.08.2024**
(21) Application number: 22879788.2
(22) Date of filing: 17.03.2022
(51) Int. Cl.: G08G 1/14, G08G 1/0969, H04L 67/10

(54) **PARKING MAP SHARING PROCESSING METHOD, APPARATUS AND SYSTEM, AND DEVICE AND STORAGE MEDIUM**

(30) Priority: 15.10.2021 CN 202111202043
(71) Applicant: Guangzhou Xiaopeng Autopilot Technology Co., Ltd., Guangzhou, Guangdong 510000 (CN)
(72) Inventor: GAUNG, Xueling, Guangzhou, Guangdong 510000 (CN); LI, Changsheng, Guangzhou, Guangdong 510000 (CN)
(74) Representative: Isarpatent
(86) International application number: PCT/CN2022/081395
(87) International publication number: WO 2023/060837

(57) **Abstract**

The present application relates to a parking map sharing processing method, a device, an apparatus, a system and a storage medium. The parking map sharing processing method includes: selecting a parking map that is available for sharing from a map dataset based on preset conditions; sending the selected parking map to a vehicle of a recipient so that the vehicle of the recipient automatically drives in accordance with the parking map. Through sharing the parking map, the solution provided by the present invention enables different users to make full use of the shared parking maps to improve parking efficiency and enhance user experience.

## Description

The present application claims the priority of Chinese Patent Application No. 202111202043.4 entitled "Method And Device For Parking Map Sharing Processing, Apparatus, And System" filed on October 15, 2021 in the China National Intellectual Property Administration, the whole disclosure of which is incorporated herein by reference.

### TECHNICAL FIELD

The present application relates to the field of automatic driving technology, and in particular to a method for parking map sharing processing, a device, an apparatus, a system and a storage medium for the same.

### BRIEF DESCRIPTION OF THE RELATED ART

Currently, with the development of automatic driving technology, vehicles can record and learn parking paths of users through relevant technologies to form a parking map. Based on the parking map that has been learned and recorded, the vehicle can realize auxiliary driving functions such as automatically adjusting the driving speed, automatically turning, avoiding pedestrians and vehicles, and finally help users automatically complete parking, greatly improving parking experience of the user.

However, the prerequisite for performing memory parking generally requires the vehicle to learn and create a parking map in the corresponding parking lot in advance. When the vehicle enters a new parking lot, such as a parking lot in a new shopping mall, the vehicle cannot perform memory parking due to absence of the created parking map in advance. If the user needs to use the memory parking function in the parking lot of the shopping mall, the vehicle of user needs to learn the parking path autonomously in advance and store it in the vehicle as a parking map for next use.

Therefore, memory parking solutions in related technologies have low parking efficiency and user experience needs to be improved.

### SUMMARY OF THE DISCLOSURE

In order to solve or partially solve the problems existing in the related art, the present application provides a parking map sharing processing method, a device, an apparatus and a system, by sharing the parking maps, which enable different users to make full use of the parking maps that are available for sharing to improve the parking efficiency, and enhance the user experience.

The present application provides a parking map sharing processing method, which includes: selecting a parking map that is available for sharing from a map dataset based on preset conditions; sending the selected parking map to a vehicle of a recipient so that the vehicle of the recipient automatically drives in accordance with the parking map. By using the method provided by the present application, the parking map is shared, so that different users can make full use of the shared parking maps to improve parking efficiency and enhance user experience, without learning to create the parking map.

In the parking map sharing processing method, the parking map includes semantic information, and the semantic information comprises at least a starting position and an ending position, wherein the starting position is a parking starting position for pulling in or a parking starting position for pulling out. The parking map of the present application adopts the means of the semantic map and uses semantic information to construct the parking map. The storage space of the semantic map is relatively small, so it also solves the problem of poor real-time performance and large storage space of the map. At the same time, it can enable the vehicle to be accurately located in a parking lot where the GPS signal is poor.

In the parking map sharing processing method, the semantic information of the parking map also comprises one of or a combination of the following: gates, parking spaces, lane lines, horizontal walls, pillars, intersections, turning points, ground signs, exit location of the parking lot. By providing more semantic information in the parking map, more accurate positioning in the parking lot can be achieved.

In the parking map sharing processing method, the parking map is named according to a preset format, and the name of the parking map uses different identifiers to distinguish types of different ending positions (or terminal locations). By distinguishing the types of different ending positions through different identifiers, charging piles, elevator entrances and other types can be better identified.

In the parking map sharing processing method, the semantic information of the parking map also comprises a floor of a parking building and positions of attribute objects. The attribute objects comprise one of or a combination of the following: charging piles, elevator entrances, retail shops or retail facilities, vehicle service shops and entrances and exits of a commercial building. By adding identifier information of the attribute objects to the parking map, it is easier for users to find the charging piles, the elevator entrances, the retail shops or retail facilities, the vehicle service shops, and the entrances and exits of a commercial building in the parking lot.

In the parking map sharing processing method, the step of selecting the parking map that is available for sharing from the map dataset based on the preset conditions, comprises: selecting the parking map that is available for sharing from a first map dataset and a second map dataset in the map dataset based on the preset conditions, wherein the parking map in the first map dataset is uploaded after learning of the parking map is completed by a vehicle of a sharer, and the parking map in the second map data set is uploaded after learning of the parking map is completed by the vehicle of the collector. By uploading the learned parking maps by the sharer and collector respectively, the map sources of the map dataset of a cloud server can be enriched.

In the parking map sharing processing method, the step of selecting the parking map that is available for sharing from the first map dataset and the second map dataset in the map dataset based on the preset conditions, comprises: selecting the parking map of the parking lot corresponding to the parking map information from the first map dataset of the map dataset, based on the obtained parking map information that is obtained by the recipient from a sharing access entry issued by the sharer; or based on an obtained current vehicle position of the recipient, selecting a parking map of the parking lot corresponding to the current vehicle position from the first map datasetand/or the second map dataset of the map dataset in accordance with preset rules, wherein the parking map in the first map dataset is the parking map screened out based on an evaluation result of the parking maps uploaded by the sharer. It can be applied to different sharing situation by selecting the shared parking map with two different ways.

In the parking map sharing processing method, the parking map in the first map dataset is the parking map screened out after an evaluation is performed based on the evaluation and/or a number of downloads of the parking maps uploaded by the sharer. The evaluation method of the present application can be performed in different ways, for example, the evaluation can be carried out based on the evaluation and/or the number of downloads of the parking map.

In the parking map sharing processing method, when based on the obtained current vehicle position of the recipient, selecting the parking map of the parking lot corresponding to the current vehicle position from the first map dataset and/or the second map dataset of the map data set in accordance with preset rules, it comprises: determining the parking lot corresponding to the current vehicle position based on the obtained current vehicle position of the recipient; based on the parking lot corresponding to the current vehicle position, selecting the parking map of the parking lot corresponding to the current vehicle position from the parking map of the first map dataset and/or the second map dataset of the map data set in accordance with the preset rules. The present application can determine the parking lot corresponding to the current vehicle position based on the obtained current vehicle position of the recipient, thereby achieving accurate positioning of the parking lot.

In the parking map sharing processing method, based on the obtained parking map information obtained by the recipient from the sharing access entry issued by the sharer, selecting the parking map of the parking lot corresponding to the parking map information from the first map dataset of the map dataset, comprises: obtaining the parking map information obtained by the recipient from the sharing access entry issued by the sharer, wherein the recipient obtains the parking map information shared by the sharer from the sharing access entry issued by the sharer, after learning of the parking map is completed by the vehicle of the sharer; based on the obtained parking map information obtained by the recipient from the sharing access entry issued by the sharer, selecting the parking map of the parking lot corresponding to the parking map information from the first map dataset of the map dataset. After learning of the parking map is completed by the sharer of the present application, it can upload the parking map to the cloud end for sharing, and generate the sharing access entry for the parking map to release it to other users, so that the recipient can directly use the sharing access entry to obtain the parking map information and download the parking map from the cloud server.

In the parking map sharing processing method, the preset rules comprise: when the parking maps in the first map dataset and the second map dataset comprise the same parking lot entrance, the parking map in the second map data set is selected; or when the parking maps in the first map dataset and the second map dataset comprise different parking maps corresponding to the same parking lot entrance, the parking map is sequentially selected in accordance with a priority order of the predetermined attribute objects in the parking map; or when the parking maps in the first map data set and the second map data set comprise different parking maps corresponding to the same predetermined attribute objects, the parking map with a short parking path is selected; or the parking map of the parking lot is selected, when the distance between said parking lot and the current vehicle position of the recipient is less than or equal to a preset distance threshold. The present application can preset different preset rules for selecting parking maps, making the setting mode more flexible and the application scenarios wider.

The present application also provides a parking map sharing processing device which includes a selection module, for selecting a parking map that is available for sharing from a map dataset based on preset conditions; a sending module, for sending the parking map selected by the selection module to a vehicle of a recipient, so that the vehicle of the recipient automatically drives in accordance with the parking map.

In the parking map sharing processing device, the device further comprises: a storage module, used for storing the map data set, which comprises a first map dataset and a second map dataset; wherein the parking map in the first map dataset is uploaded after learning the parking map is completed by a vehicle of a sharer, and the parking map in the second map dataset is uploaded after learning of the parking map is completed by a vehicle of a collector.

The present application also provides a parking map sharing processing system, which comprises: a cloud server, for selecting a parking map that is available for sharing from a map dataset based on preset conditions, and sending the selected parking map to a vehicle of a recipient; the vehicle of the recipient, for receiving the parking map which is sent by the cloud server and performing automatically driving in accordance with the parking map.

In the parking map sharing processing system, the system further comprises a vehicle of a collector and/or a vehicle of a sharer; the vehicle of the collector is used for uploading the learned parking map to the cloud server to form the second map dataset in the map dataset of the cloud server; the vehicle of the sharer is used for uploading the learned parking map to the cloud server to form the first map dataset in the map dataset of the cloud server.

The present application also provides a cloud server, which comprises: a processor; and a memory, having executable codes stored thereon, when the executable codes are executed by the processor, configured to enable the processor to perform the method above.

The present application also provides a computer-readable storage medium on which executable codes are stored. When the executable codes are executed by a processor of an electronic device, the processor is configured to perform the method as described above.

According to the parking map sharing processing method provided by the present application, the sharing of the parking map makes different users to make full use of the shared parking map without learning to create the parking map, to improve the parking efficiency and enhance the user experience.

It should be understood that the above general description and the following detailed description are only exemplary and explanatory, and do not limit the present application.

### BRIEF DESCRIPTION OF THE DRAWINGS

The foregoing and other purposes, features and advantages of the present application will be more apparent by describing the exemplary embodiments of the present application in detail in conjunction with the drawings, wherein the same reference numbers generally represent the same components in the exemplary embodiments of the present application.
FIG.1 is a schematic flow chart of the parking map sharing processing method shown in the present application;
FIG.2 is another schematic flow chart of the parking map sharing processing method shown in the present application;
FIG.3 is a schematic flow chart of the parking map sharing corresponding to FIG. 2;
FIG.4 is another schematic flow chart of the parking map sharing processing method shown in the present application;
FIG.5 is a schematic flow chart of the parking map sharing corresponding to FIG. 4;
FIG.6 is another schematic flow chart of the parking map sharing processing method shown in the present application;
FIG.7 is a schematic flow chart of the parking map sharing corresponding to FIG. 6;
FIG.8 is a schematic structural diagram of a parking map sharing processing device shown in the present application;
FIG.9 is another schematic structural diagram of the parking map sharing processing device shown in the present application;
FIG.10 is a schematic structural diagram of the parking map sharing processing system shown in the present application; and
FIG.11 is a schematic structural diagram of a cloud server shown in the present application.

### DETAILED DESCRIPTION OF EXEMPLARY EMBODIMENTS

The embodiments of the present application will be described in detail below in conjunction with the drawings. Although the embodiments of the present application are illustrated in the drawings, it should be understood that the present application may be realized in various forms without being limited by the embodiments set forth herein. Rather, these embodiments are provided to make the present application more thorough and complete, and enable the scope of the present application to be conveyed entirely to those skilled in the art.

The terminology used in the present application is used solely for the purpose of describing the specific embodiments and is not intended to limit the present application. In present application and appended claims, the single forms of "a/an", "the" and "said" are also intended to include majority forms, unless the context clearly indicates otherwise meaning. It should be also understood that the term "and/or" used herein refers to and encompasses any or all possible combinations of one or more associated listed items.

It should be understood, although the items "first", "second", "third" and so on are used in present application to describe various types of information, the information should not be limited by the items. These items are solely used to distinguish information of the same type from each other. For example, without departing from the scope of the present application, the first information may also be referred to as the second information, and similarly, the second information may also be referred to as the first information. As a result, a feature defined by "first" or "second" may expressly or implicitly include one or more such features. In the description of the present application, "a plurality of or more than one" means two or more, unless otherwise specifically limited herein.

The technical solution of the present application is described in detail below with reference to the drawings.

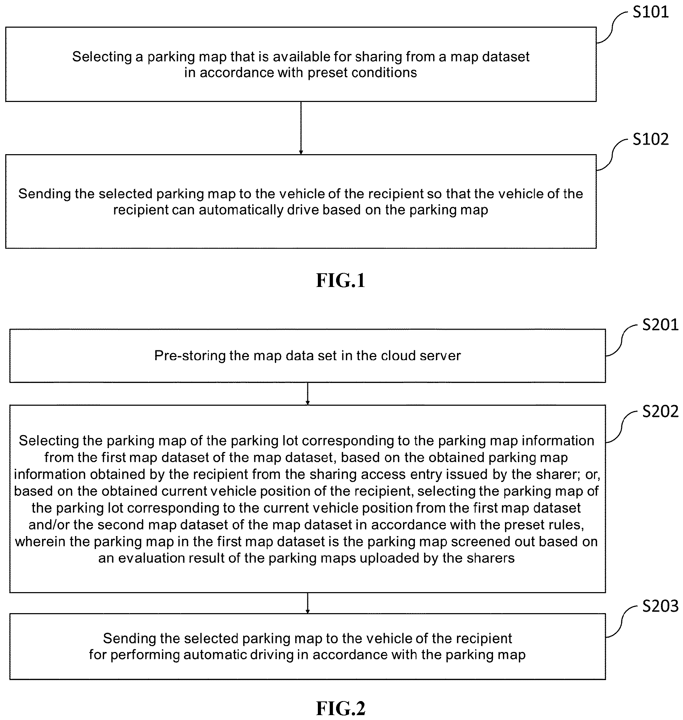

FIG. 1 is a schematic flow chart of the parking map sharing processing method shown in the present application.

Referring to FIG. 1, this application provides a parking map sharing processing method. It includes:
S101: Selecting a parking map that is available for sharing from a map dataset in accordance with preset conditions.

The map dataset of the present application may include a first map dataset and a second map dataset. The parking map in the first map dataset is uploaded after learning of the parking map by a vehicle of a sharer, and the parking map in the second map dataset is uploaded after learning of the parking map by a vehicle of a collector. This step may select the parking map that is available for sharing from the first map dataset and the second map dataset in the map dataset.

The parking map of the present application can be constructed using semantic information, i.e. the parking map can include the semantic information. The semantic information of the parking map includes at least a starting position and an ending position. The starting position can be a parking starting position for pulling out or a parking starting position for pulling out, e.g. the parking starting position for pulling in can be an entrance position of the parking lot, and the parking starting position for pulling out can be a parking space position. The semantic information of the parking map also includes one of or a combination of the following: gates, parking spaces, lane lines, horizontal walls, pillars, intersections, turning points, ground signs, and exit location of the parking lot.

The semantic information in the parking map may also include a floor of a parking building and positions of attribute objects. The attribute objects include one of or a combination of the following: charging piles, elevator entrances, retail shops or retail facilities, vehicle service shops, and entrances and exits of a commercial building. The entrances and exits of the commercial building include the entrances or exits of the commercial building, which can include shopping malls, office buildings, etc.

In this step, selecting the parking map of the parking lot corresponding to a parking map information from the first map dataset of the map dataset based on the obtained parking map information obtained by the recipient from the sharing access entry issued by the sharer; or, based on the obtained current vehicle position of the recipient, selecting the parking map of the parking lot corresponding to the current vehicle position from the first map dataset and/or the second map dataset of the map dataset according to preset rules, wherein the parking map in the first map dataset is the parking map screened out based on the evaluation results of the parking maps uploaded by the sharer. The sharing access entry may include a shared link or a QR code, etc.

S102. Sending the selected parking map to the vehicle of the recipient so that the vehicle of the recipient can automatically drive based on the parking map.

In this step, the selected parking map is sent to the vehicle of the recipient. After receiving the parking map, the vehicle of the recipient will automatically drive based on the parking map.

Using the method provided by the present application, through parking map sharing, different users can create parking maps without learning, and make full use of the parking maps that are available for sharing to improve parking efficiency and user experience.

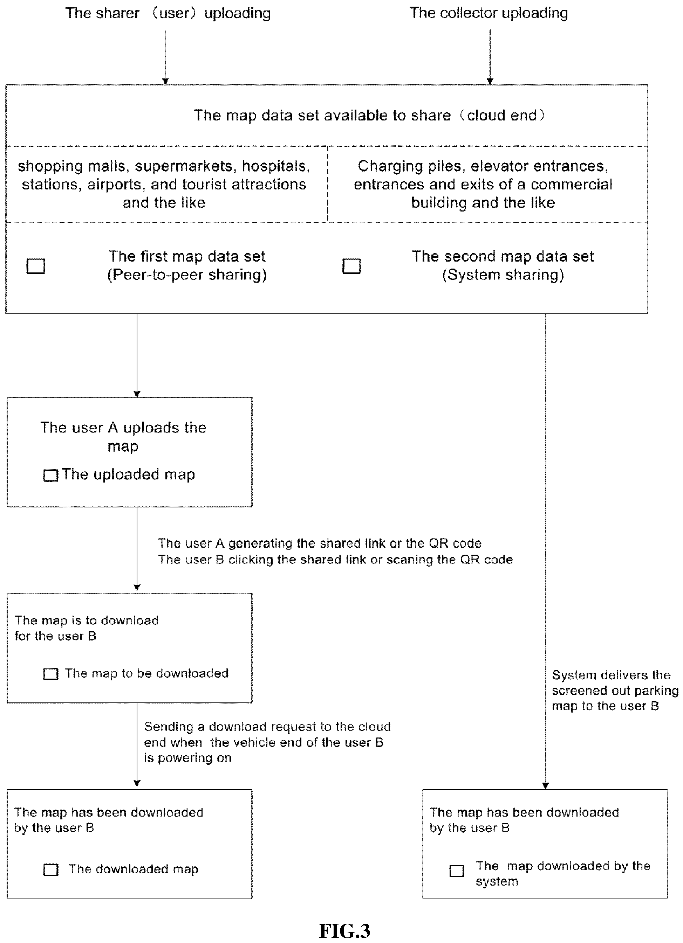

FIG. 2 is another schematic flowchart of the parking map sharing processing method shown in the present application, and FIG. 3 is a schematic flowchart of the parking map sharing corresponding to FIG. 2.

The present application can share the map data to a cloud server (referred to as the cloud end) in two ways: a vehicle of a user(i.e., the sharer) uploads the parking map that has completed learning and a professional collection team (i.e., the collector) collects the parking map, making the parking map set available for sharing to be obtained by the cloud server; the users can share peer-to-peer to obtain parking maps, and a system of the cloud server can also automatically issue parking maps based on the vehicle position; the users can park in parking spaces nearby such as charging piles, elevator entrances, and entrances and exits of the commercial buildings, in an unfamiliar parking lot based on the obtained parking maps.

Referring to FIG.s 2 and 3, the present application provides a parking map sharing processing method, which includes:
S201, pre-storing the map dataset in the cloud server.

The map dataset may include the first map dataset and the second map dataset, where the parking map in the first map dataset is uploaded by the vehicle of a sharer after learning of the parking map is completed, and the parking map in the second map dataset is uploaded by the vehicle of the collector after learning of the parking map is completed.

It can be understood that the cloud server (referred to as the cloud end) can collect parking maps through multiple channels to enrich the parking maps in the map dataset that is available for sharing and is stored in the cloud end, so that there are more abundant parking maps to share. In the present application, the vehicle of the collector (referred to as the map collection vehicle terminal) can learn parking paths in different locations such as parking lots, generate the learned parking map as a second parking map, and upload it to the cloud end. For example, the map collection vehicle terminal can learn parking paths for parking lots in specific scenes or popular locations, such as shopping malls, supermarkets, hospitals, stations, airports, and tourist attractions. The collector can generally be a professional collection team.

In addition, each user can also be used as the sharer, and the parking map of the vehicle of a sharer which has completed learning can be uploaded to the cloud end as a first parking map. After learning of the parking map is completed by the vehicle of the sharer, an upload entry can be displayed on the interface where the learning is completed. After entering the upload page through the upload entry, the sharer can fill in upload information and initiate sharing. The upload information may include: the floor where the parking space is located, attribute objects nearby the parking space (charging piles, elevator entrances, retail shops or facilities, vehicle service shops and entrances and exits of a commercial building, and others), etc. The retail shops may for example refer to the convenience shops located in the parking lot; the retail facilities may refer to, for example, unmanned vending machines located in the parking lot; the vehicle service shops may include, for example, shops that provide services such as car washing, car repair, and maintenance; entrances and exits of the commercial building include the entrances or exits of the commercial buildings, the commercial buildings can include shopping malls, office buildings, etc. The upload information is sent by a processor of the vehicle to a map storage module and uploaded to the cloud server. For multiple-selected parking space attributes, the cloud server can determine a priority. The priority can be: charging piles>elevator entrances>retail shops or retail facilities>vehicle service shops> entrances and exits of a commercial building >others.

That is to say, depending on a data source, the map dataset may include the first map dataset and the second map dataset. The parking map in the first map dataset is uploaded by the vehicle of the sharer after learning of the parking map is completed. The parking map in the second map dataset is uploaded by the vehicle of the collector after learning of the parking map is completed. The first map dataset includes the first parking map, and the second map dataset includes the second parking map.

It is understood that the same parking lot can correspond to multiple different parking maps. The parking map may include parking paths and parking spaces. When the parking paths and/or parking spaces in the two parking maps correspond to different ones, it means that the two parking maps are different.

In order to reduce the memory occupied by the parking map in the cloud end and the vehicle terminal (referred to as the vehicle end), the present application can use semantic information to create the parking map. The semantic information of the parking map includes at least the entrance position and ending position of the parking lot. The semantic information of the parking map can also include one of or a combination of the following: gates, parking spaces, lane lines, horizontal walls, pillars, intersections, turning points, ground signs, and exit location of the parking lot. The parking map (semantic map) created by using semantic information has a relatively small storage space and can achieve accurate positioning of vehicles in parking lots with poor GPS (Global Positioning System) signals.

Further, the parking map may include a floor of a parking building and positions of attribute objects. The attribute objects include one of or a combination of the following: charging piles, elevator entrances, retail shops or retail facilities, vehicle service shops, and entrances and exits of a commercial building. When passing by the charging piles, the elevator entrances or the entrances and exits of the commercial building during a parking learning process, the corresponding information of the attribute objects can be identified as the identifier information of the parking map. Users generally tend to park in a position close to the charging piles, the elevator entrances, or the entrances or exits of the commercial building in parking lots. Due to the complex environment of an underground parking lots and unclear signs, the users often waste a lot of time for looking for the charging piles, the elevator entrances, and the entrances and exits of the commercial buildings in the underground parking lots. By adding identifier information for parking, the present invention can quickly guide the users to the desired destination through the information of these attribute objects. It can be understood that, further, the parking map may include the following information: the name of the corresponding parking lot, the floor of the parking building, an ending location, a path length, etc. This information makes it easy to identify different parking maps.

Furthermore, the present invention can use the position where the GPS signal is weakened or lost as the position of the entrance of the parking lot, where the position of the entrance of the parking lot can be used as the starting position of the parking map. It can be understood that for the underground parking lots, the GPS signal is generally much weaker than the signal on the ground, and may even vanish or be lost. When the signal strength of the GPS signal of the vehicle terminal, which is detected by the cloud end, is lower than a preset strength threshold, it can determine the position where the signal is below the preset strength threshold as a lost signal position. Therefore, the lost signal position i.e. where the GPS signal is weakened or vanished is determined as the starting position of the parking map. The lost signal position can be used as the starting position for the vehicle end to learn and create the parking map. The lost signal position can also be used as the starting position for the vehicle end to start memory parking according to the parking map. In one embodiment, a positioning information of the lost signal position, such as GPS coordinates, can also be used as the query index of the parking map. That is to say, the parking lot corresponding to the parking map can be determined through the positioning information. The positioning information of the lost signal position may be longitude and latitude coordinates, etc. Each parking map has corresponding coordinates, so it is only necessary to use the GPS coordinates to know the corresponding parking lot. In addition, after vanishing of the GPS signal, one may rely on semantic elements of the parking map (such as parking spaces, lane lines, horizontal walls, pillars, intersections, turning points, ground markings, etc.) to perform positioning through matching.

Further, the cloud end can form the first map dataset by the first parking map, and second map dataset by the second parking map, and then aggregate them into the map dataset this is available for sharing. In order to distinguish different parking maps, each parking map can be named. In one embodiment, a map naming format may be "venue (parking lot location) + parking lot ID + path end point type number + serial number". The names of the parking maps can be distinguished by different identifiers to distinguish the types of different ending positions. For example, the path end point type numbers are: 1, 2, 3, and 4. 1 represents the charging pile; 2 represents the elevator entrance; 3 represents the entrances and exits of the commercial building; 4 represents others. It should be noted that this is just an example but not limited to this, and other identifiers can also be used to differentiate.

S202, selecting the parking map of the parking lot corresponding to the parking map information from the first map dataset of the map dataset, based on the obtained parking map information obtained by the recipient from the sharing access entry issued by the sharer; or, based on the current vehicle position obtained by the recipient, selecting the parking map of the parking lot corresponding to the current vehicle position from the first map data set and/or the second map data set of the map data set in accordance with the preset rules, wherein the parking map in the first map dataset is the parking map screened out based on an evaluation result of the parking maps uploaded by the sharers.

For example, after learning of the parking map is completed in some parking lot by the vehicle of the user A, the parking map is uploaded to the cloud end for sharing, and the sharing access entry for the parking map is generated and released to other users. The sharing entry may be, for example, a shared link or a QR code or the like. The parking map information shared by the user A is obtained by a user B through the sharing access entry issued by the sharer i.e. the user A. For example, the parking map information shared by the user A is obtained by the user B through clicking the shared link or scanning the QR code, and requests the cloud end to download it. The cloud end selects the parking map of the parking lot corresponding to the parking map information from the first map dataset of the map dataset, based on the obtained parking map information obtained by the recipient, i.e. the user B, from the sharing access entry issued by the user A. In addition, after the parking map is shared by the user A to the user B, the user B can continue to share this path to a user C.

For example, after learning of the parking map is completed in some parking lot by the collector, the parking map is uploaded to the cloud end for sharing. Based on the obtained current vehicle position of the recipient, i.e. the user B, the cloud end selects the parking map of the parking lot corresponding to the current vehicle position from the first map dataset and/or the second map dataset of the map data set according to the preset rules. The cloud end can screen out the parking map based on the preset rules, and automatically download the parking map of the nearby parking lots to the vehicle of the recipient based on the current vehicle position of the recipient, for positioning. A portion of the parking maps delivered from the cloud end can be derived from high-quality maps collected by professional teams, and the other portions can be maps of good reputation obtained by user evaluations.

S203: sending the selected parking map to the vehicle of the recipient for performing automatic driving in accordance with the parking map.

The cloud server sends the screened out parking map to the vehicle of the recipient, so that the vehicle of the recipient can perform automatic driving based on the parking map for achieving memory parking. The parking map can be used to meet the current parking needs of the vehicle of the recipient for performing automatic driving in the parking lot, and can also be used to meet the future parking needs of performing automatic driving in the corresponding parking lot.

The parking map sharing processing method of the present application, screens out the corresponding parking map from the map dataset and send it to the corresponding vehicle of the recipient, so that the vehicle of the recipient can perform automatic driving according to the parking map. This design makes that the vehicle of the recipient can create parking maps without learning, and different users can make full use of the parking map that is available for sharing to improve parking efficiency and user experience.

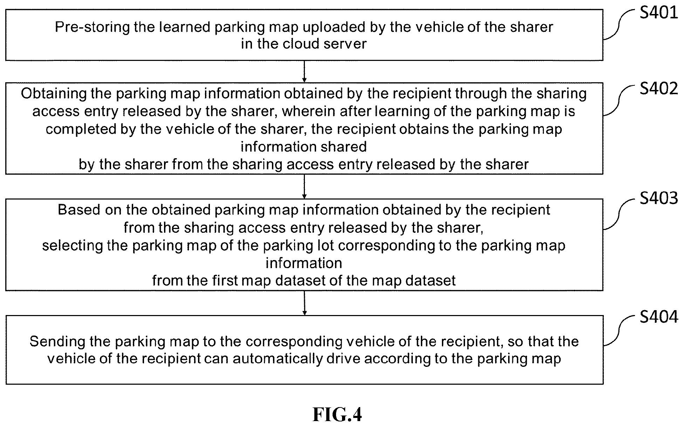

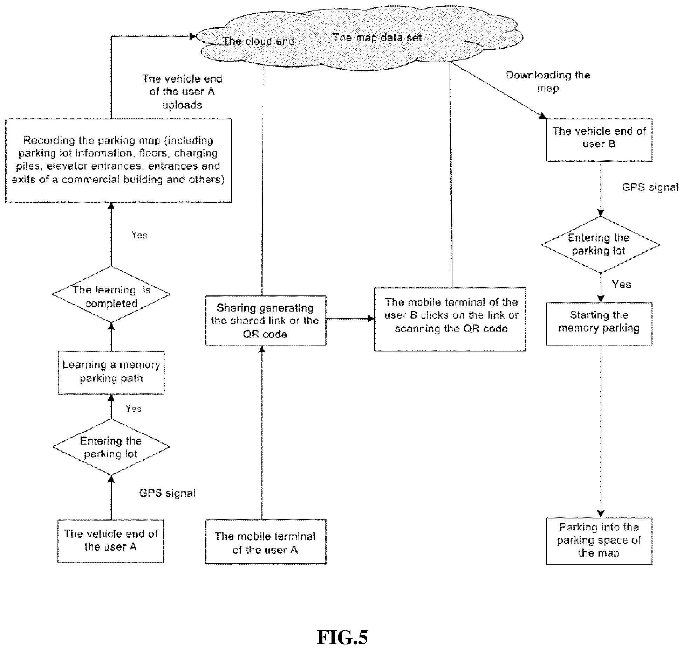

FIG. 4 is another schematic flowchart of the parking map sharing processing method shown in the present application; FIG. 5 is a schematic flowchart of the parking map sharing corresponding to FIG. 4.

FIG. 4 and FIG. 5 illustrate with examples that the sharer shares the designated parking map that is available for sharing to the recipient, but is not limited to this. This sharing mode can be called a peer-to-peer sharing mode.

Referring to FIG. 4 and FIG. 5, the present application provides a parking map sharing processing method, including:
S401: Pre-storing the learned parking map uploaded by the vehicle of the sharer in the cloud server.

The learned first parking map uploaded by the vehicle of the sharer is pre-obtained and stored on the cloud server, thereby forming the first map data set in the map data set available to share.

For example, the vehicle of the user A enters a target parking lot. If the GPS signal weakens to below a set threshold (for example, 30dB) due to building obstructions, this position will be used as the starting position of the parking map. The memory parking function is activated by user A, and learning the parking path is performed. After learning is completed by the user A, a graphical user interface control such as a path sharing button will pop up on a large screen of the vehicle. After clicking the share button and being authorized by the user A, a key information of the path may be input, thereby uploading the learned parking map to the cloud end. The input information can include parking lot information, floors, charging piles, elevator entrances, entrances and exits of the commercial building, etc. When the user A is as the sharer, after uploading the learned parking map to the cloud end, the user A can also share the parking map with the user B, so that vehicle of the user B can directly perform memory parking according to the parking map shared by the user A without having to learn again by itself. For example, the user A can use an application program of a terminal to generate the sharing access entry of the parking map and release it to other users. The terminal may include a PC, a Mac, a laptop, a mobile phone, a tablet and other mobile terminal. The following uses the mobile terminal as an example to provide a detailed description. The sharing access entry may be, for example, the shared link or the QR code. For example, the application program (APP) interface of the mobile terminal of the user A can synchronize the parking map information uploaded by the vehicle. The shared link or the QR code is generated through clicking on the graphical user interface controls, such as a path sharing button, by user A.

S402: Obtaining the parking map information obtained by the recipient through the sharing access entry issued by the sharer, wherein after learning of the parking map is completed by the vehicle of the sharer, the recipient obtains the parking map information shared by the sharer from the sharing access entry issued by the sharer.

Through the sharing access entry issued by the sharer, i.e. the user A, the parking map information shared by user A is obtained by the user B. The sharing access entry includes the shared link or QR code that contains the designated shared parking map. The recipient can initiate a download request to the cloud end by clicking on the shared link or scanning the QR code through the mobile terminal thereof. For example, the user B obtains the parking map information shared by the user A by clicking the shared link or scanning the QR code through the mobile terminal, and requests to download toward the cloud end. Based on the downloaded parking map, the user B can quickly and easily park his vehicle into the target parking space, without learning the parking lot map anymore.

In order to enable the sharing of the parking map between the sharer and the recipient, in one embodiment, after generating the sharing access entry including the parking map by the sharer, through accessing the sharing access entry, the mobile terminal of the recipient can obtain the parking map information shared by the user A and initiate the download request to the cloud end to download the parking map. The cloud end can obtain the parking map information obtained by the recipient from the sharing access entry issued by the sharer through the received download request. In subsequent steps, the cloud end will send the designated shared parking map to the corresponding vehicle of the recipient based on the download request of the recipient.

The mobile terminal of the user can be a smart device such as a mobile phone, a tablet, a smart bracelet, a laptop, a tablet computer, etc.

The sharer can share the sharing access entry to social network, community websites or the like through network communication, so that any recipient can access and download the parking map. The recipient can also forward the sharing access entry to other recipients so that they can access and download. With this design, the parking map of the same parking lot only needs to be learned by one vehicle terminal of the sharer, and can be spread to multiple vehicles of the recipient for use, thus improving the parking efficiency of many users.

It should be noted that both the sharer and the recipient can view, share, download, and delete the parking map of the vehicle terminal through the mobile terminals. For example, through the mobile terminal, the user B can view the parking lot name, the floor of the parking building, the ending location, the path length, charging piles, entrances and exits of a commercial building, elevator entrances, etc. of the parking lot corresponding to the parking map. For the same parking lot entrance, if the vehicle of the recipient does not store the corresponding parking map, the recipient can download the parking map to the vehicle by initiating the download request; for the same parking lot entrance, if the vehicle has stored the parking map, it is possible to give a reminder to the recipient for confirming whether to download a new parking map to replace the original parking map or not; when the number of parking maps downloaded by the recipient exceeds the set threshold, the recipient will be reminded to delete other parking maps until the number of parking maps is less than the set threshold.

S403: based on the obtained parking map information obtained by the recipient from the sharing access entry issued by the sharer, selecting the parking map of the parking lot corresponding to the parking map information from the first map dataset of the map dataset.

The cloud end selects the parking map of the parking lot corresponding to the parking map information from the first map dataset of the map dataset, based on the obtained parking map information obtained by the recipient, i.e. the user B, from the sharing access entry issued by the user A.

S404: Sending the parking map to the corresponding vehicle of the recipient, so that the vehicle of the recipient can automatically drive according to the parking map.

The cloud end will send the parking map screened out to the corresponding vehicle of the recipient, and the vehicle of the recipient can automatically drive based on the parking map to achieve memory parking.

The technical solution provided by the present invention only requires the sharer to upload the learned parking map to the cloud end, and then the designated shared parking map can be shared with any other recipient through sharing, thereby realizing a parking map sharing from user to user, improving the parking efficiency of each user; and the recipient can initiate the download request to the cloud end anytime and anywhere according to the sharing access entry, allowing the vehicle to store the parking map in advance for subsequent use; in addition, in the present application the parking map uses the semantic information to create the parking map, which can save storage space on the cloud end and the vehicle end. At the same time, it can also use various semantic information of the parking lot to achieve an accurate positioning in the parking lot, avoiding inaccurate positioning problems when it is impossible to position through the GPS signals in real time; in addition, by marking the information of the attribute objects of the parking map, it is possible to quickly guide the users to nearby destination parking spaces, whereby the user experience can be improved.

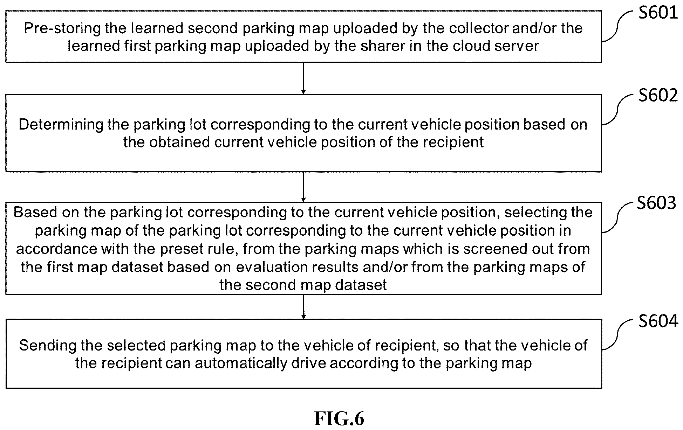

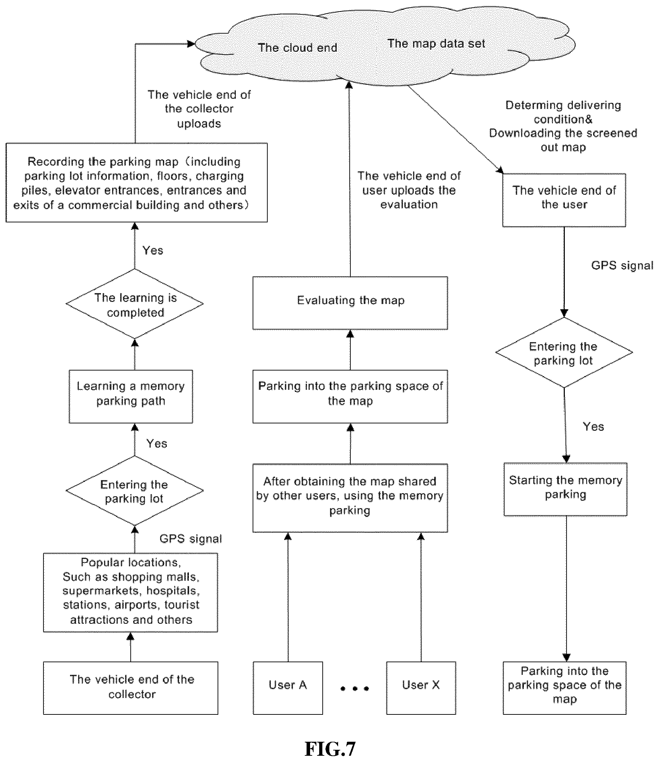

FIG. 6 is another schematic flowchart of the parking map sharing processing method shown in the present application; and FIG. 7 is a schematic flowchart of the parking map sharing corresponding to FIG. 6. FIG.s 6 and 7 use the cloud end actively sharing the parking map with the vehicle of the recipient as an example but are not limited to this. This sharing mode can be called a system sharing mode.

Referring to FIG.s 6 and 7, the present application provides a parking map sharing processing method, which includes:
S601. Pre-storing the learned second parking map uploaded by the collector and/or the learned first parking map uploaded by the sharer in the cloud server.

It is possible to on the cloud server to pre-obtain and store the learned second parking map uploaded by the collector and the learned first parking map uploaded by the sharer to form the map dataset that is available for sharing. The cloud end can form the first parking map into the first map dataset, and the second parking map into the second map dataset, and aggregate both into the map dataset that is available for sharing. The parking maps in the first map dataset may be parking maps screened out based on the evaluation results of the parking maps uploaded by the sharer.

A part of the maps available to share by the cloud system in the present application can be derived from parking maps collected and uploaded by the collector. The collector can generally be a professional collection team. For example, the vehicle terminal of the parking map collection of the collector can perform learning of parking paths for parking lots in specific scenes or popular locations, which can be for example shopping malls, supermarkets, hospitals, stations, airports, and tourist attractions and the like.

The other part of the parking maps available to share by the cloud system in the present application can be parking maps with good reputations selected from the parking maps uploaded by users based on user evaluations. For example, the parking maps can be screened out in the first map dataset based on the evaluation results of the parking maps uploaded by the sharer. Evaluation parameters can include the number of likes and/or downloads, and the parking maps exceeding a preset threshold can be screened out. The preset threshold may be flexibly set according to a requirement. For example, when the number of likes on the parking map exceeds the preset threshold (for example, 100), the parking map can be used as the screened out parking map; or when the number of downloads of the parking map exceeds the preset threshold (for example, 100), the parking map can be used as the screened out map; when both of the number of likes and downloads of the parking map exceed the preset threshold, the parking map can be used as the screened out parking map. For example, after sharing the parking map through the peer-to-peer sharing mode among the users and using the downloaded parking map to complete the memory parking function, it is possible to donate "like" and comments on the shared parking map. The cloud end can count the "likes" and comments of different parking maps, and the parking map with a number of "likes" exceeding the preset threshold can be marked as the high-quality parking map.

S602: Determining the parking lot corresponding to the current vehicle position based on the obtained current vehicle position of the recipient.

This step can determine the parking lot corresponding to the current vehicle position based on the obtained current vehicle position of the recipient.

It can be understood that the present invention can use the position where the GPS signal is weakened or lost as the parking lot entrance position. The lost signal position can be used as the starting position for the vehicle terminal to learn and create the parking map. The positioning information of the lost signal position is used as a query index of the parking map. Vehicles generally perform memory parking in parking lots, so the point where the GPS signal of the vehicle is lost can be determined as the current position of the vehicle, and the latitude and longitude coordinates of the point where the signal is lost can be used as the query index to quickly determine the corresponding parking lot.

S603: Based on the parking lot corresponding to the current vehicle position, selecting the parking map of the parking lot corresponding to the current vehicle position in accordance with the preset rules, from the parking maps which are screened out from the first map dataset based on the evaluation results and/or from the parking maps of the second map dataset.

According to the parking lot corresponding to the current vehicle position, the cloud server selects the parking map of the parking lot corresponding to the current vehicle position according to the preset rules, from the parking maps screened out from the first map dataset based on the evaluation results and/or from the parking maps of the second map dataset.

Further, the preset rules can include the following rules:

When the parking maps in the first map dataset and the second map dataset include the same parking lot entrance, the parking map in the second map dataset is selected. It can be understood that the second parking map is created by the collector, i.e. a professional map collection vehicle terminal, which has higher accuracy than the first parking map, so the second parking map is preferred.

When different parking maps corresponding to the same parking lot entrance are included, the parking map is selected in order of priority of the predetermined attribute objects in the parking map. In one embodiment, the priorities of attribute objects included in multiple parking maps are compared, and the parking map with the highest priority is screened out and determined. In one embodiment, a priority level of the attribute objects can be ranked in the order of "charging piles > elevator entrances > retail shops or retail facilities > vehicle service shops > entrances and exits of a commercial building > others". That is to say, when the parking map data set available for sharing comprises multiple parking maps corresponding to the same parking lot, if each parking map includes attribute objects respectively, and if the attribute objects included in each parking map are same or different, the parking map is screened out and determined according to the priority level of attribute objects. For example, when one of the parking maps includes the charging piles and the other parking map includes the elevator entrances, the parking map containing the charging piles will be selected preferably.

When including different parking maps corresponding to the same set attribute objects, the parking map with the short parking path is selected. Further, the path lengths of multiple parking maps can be compared, and the parking map with the shortest path length can be selected. It can be understood that in order to reduce detours, when there are multiple parking maps in the same parking lot, the path lengths of each parking map are compared and the shortest parking map is selected, thereby improving parking efficiency.

In addition, the parking map of the parking lot, which has less than or equal distance to a preset distance threshold from the current vehicle position of the recipient, can also be selected. It can be understood that according to the current vehicle position, the parking map of the parking lot nearby the vehicle can be sent to the vehicle. For example, the preset distance threshold can be 500 meters, and the cloud end can select all the parking maps for parking lots that are less than or equal to 500 meters away from the current vehicle position of the recipient.

It should be noted that, in order to reduce interference, only one parking map can be selected to be sent to the vehicle of the recipient.

S604: Sending the selected parking map to the vehicle of the recipient, so that the vehicle of the recipient can automatically drive according to the parking map.

The selected parking map is sent to the vehicle of the recipient by the cloud end, and the vehicle of the recipient can automatically drive based on the parking map to achieve memory parking. For example, based on the downloaded parking map, the user B can quickly and easily park the vehicle into the target parking space without having to learn the parking map.

It should be noted that in order to ensure the driving safety of the vehicle, the cloud end may not send the parking map to the vehicle of the recipient for sharing under the following circumstances. In one embodiment, in order to detect the current position of the vehicle, when the vehicle is on a highway, a national highway, or an expressway, the parking map will not be sent; when a speed of the vehicle exceeds a preset speed threshold (for example, 60 km/h), the parking map will not be sent; when the vehicle is autonomously learning the parking map or when the vehicle is receiving the corresponding parking map available for sharing which is specified by the sharer, the parking map will not be sent; when the vehicle has stored the corresponding parking map, the parking map will not be sent; when the number of parking maps stored in the vehicle exceeds a preset quantity threshold (for example, 5), the parking map will not be sent, thereby reducing the occupied storage space of the vehicle. It can be understood that when the vehicle of the recipient has all or one or more of the above situations at the same time, although the download request of the recipient is received by the cloud end, the parking map may not be sent to the vehicle of the recipient for sharing until the above situation is eliminated at the vehicle of the recipient, the cloud end will send it again.

As can be seen from this embodiment, in the technical solution provided by the present application: the corresponding parking maps in the map dataset is automatically screened out by the cloud end based on the current vehicle position, and according to the preset rules, the selected high-quality parking map or the parking map with good reputation is sent to the vehicle of the recipient, so that the vehicle terminal of the recipient does not need to autonomously learn the parking map. It can directly enable automatic driving based on the parking map sent by the cloud end and complete the memory parking, thereby improving parking efficiency.

It should be noted that the parking map described in the present application is not limited to a parking path for pulling in the vehicle from the parking lot entrance to the parking space, but can also be the parking path for pulling out the vehicle from the parking space to the parking lot exit. In other words, the parking map sharing processing method of the present application is suitable for parking map sharing in a scene of pulling in the vehicle and a scene of pulling out the vehicle, which are similar in principles.

As described above, the solution provided by the present invention enables different users without learning to create the parking map through parking map sharing, and fully utilizes the parking map available for sharing to improve parking efficiency and user experience. In the solution provided by the present application, the parking map adopts a mode of the semantic map and uses the semantic information to construct the parking map. The storage space of the semantic map is relatively small, therefore, the problem of poor real-time performance and the problem of large storage space of the map are also solved, and the accurate positioning of the vehicle in the parking lots with poor GPS signal can be achieved at the same time. The solution provided by the present invention marks the floor information, the charging piles, the elevator entrances, the entrances and exits of commercial building and other information in the parking map, which also solves the problem that users often waste a lot of time to find the charging piles, the elevator entrances, the entrances and exits of the commercial building in underground parking lots. The solution provided by the present invention also provides a high-quality map recommendation function, which can screen out the high-quality map based on the evaluation of users. In addition, a professional collection team can also collect maps of the parking lots in some popular locations to obtain high-quality maps.

In accordance with the method to implement the aforementioned application function, the present application also correspondingly provides a parking map sharing processing device, a terminal apparatus and a system thereof.

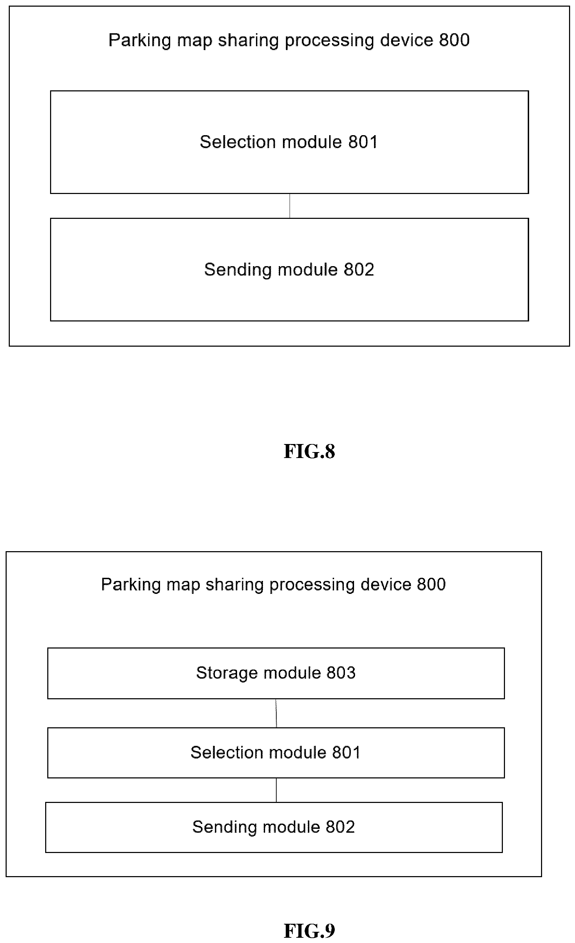

FIG. 8 is a schematic structural diagram of the parking map sharing processing device shown in the present application.

Referring to FIG. 8, the present application provides a parking map sharing processing device 800, which includes: a selection module 801 and a sending module 802.

The selection module 801 is used to select a parking map that is available for sharing from a map data set according to preset conditions. The map data set of the present application may include a first map dataset and a second map dataset. The parking map in the first map dataset is uploaded after learning of the parking map is completed by the vehicle of the sharer, and the parking map in the second map dataset is uploaded after learning of the parking map is completed by a vehicle of a the collector. The selection module 801 may select the parking map of the parking lot corresponding to the parking map information from the first map dataset of the map dataset, based on the obtained parking map information obtained by a recipient from the sharing access entry issued by a sharer; or based on the obtained current vehicle position of the recipient, selecting the parking map of the parking lot corresponding to the current vehicle position from the first map dataset and/or the second map dataset of the map dataset according to preset rules, wherein the parking map in the first map dataset is the parking map screened out based on evaluation results of the parking maps uploaded by the sharer. The sharing access entry may include a shared link or a QR code, etc.

The sending module 802 is used to send the parking map selected by the selection module 801 to the vehicle of the recipient, so that the vehicle of the recipient can automatically drive according to the parking map.

Utilizing the parking map sharing processing device provided by the present application, through the parking map sharing, different users can fully utilize the parking map that is available for sharing, without learning to create the parking map, to improve parking efficiency and enhance user experience.

FIG. 9 is another structural schematic diagram of the parking map sharing processing device shown in the present application.

Referring to FIG. 9, the present application provides a parking map sharing processing device 800, which includes: a selection module 801, a sending module 802 and a storage module 803.

The functions of the selection module 801 and the sending module 802 can be found in FIG. 8 and will not be described again here.

The storage module 803 is used to store a map dataset. The map dataset includes a first map dataset and a second map dataset; a parking map in the first map dataset is uploaded by a vehicle of a sharer after learning of the parking map is completed. The parking map in the second map dataset is uploaded by a vehicle of a collector after learning of the parking map is completed. The present application can select the parking map that is available for sharing from the first map dataset and the second map dataset in the map dataset. The parking map of the present application can be constructed using the semantic information. The semantic information of the parking map includes at least a starting position and an ending position. The starting position can be a parking starting position for pulling in or a parking starting position for pulling out. The semantic information of the parking map also includes one of or a combination of the following: gates, parking spaces, lane lines, horizontal walls, pillars, intersections, turning points, ground signs, and an exit location of the parking lot. The semantic information of the parking map may also include a floor of a parking building and the position of the attribute objects. The attribute objects include one of or a combination of the following: charging piles, elevator entrances, retail shops or retail facilities, vehicle service shops, and entrances and exits of a commercial building.

The parking map sharing processing device of the present invention can screen out the corresponding parking map from the map dataset that is available for sharing and send it to the corresponding vehicle terminal, so that the vehicle terminal can automatically drive according to the parking map. This design eliminates the need for the vehicle terminal of learning to create the parking map. By sharing the parking maps, different users can make full use of the parking map that is available for sharing to improve parking efficiency and user experience.

This application also provides a cloud server, which includes the above-mentioned parking map sharing processing device 800. The structure and function of the parking map sharing processing device 800 can be referred to the description in FIG.s 8 and 9, and will not be described again herein.

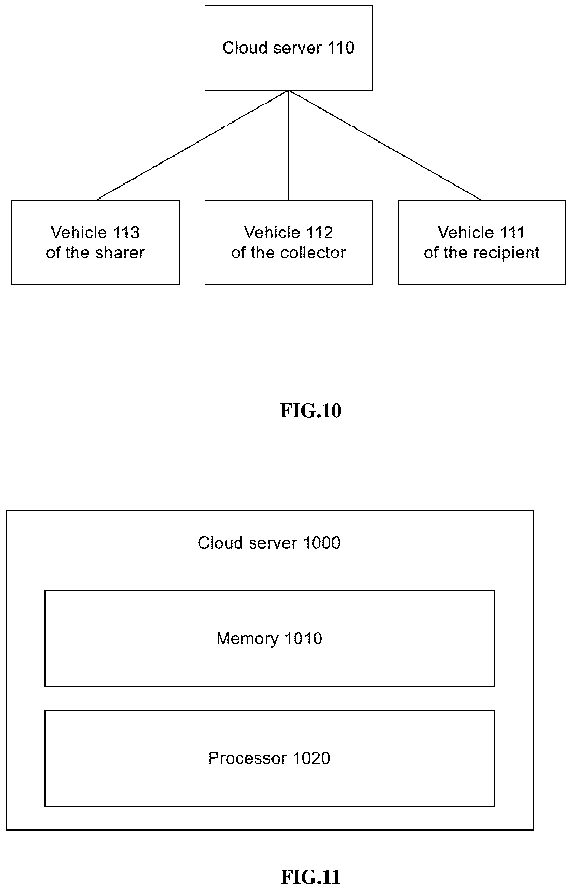

FIG. 10 is a schematic structural diagram of the parking map sharing processing system shown in the present application.

Referring to FIG. 10, the present application provides a parking map sharing processing system, which includes: a cloud server 110 and a vehicle 111 of a recipient.

The cloud server 110 is used for selecting a parking map that is available for sharing from a map dataset according to preset conditions; and sending the selected parking map to the vehicle of the recipient. The cloud server 110 may pre-store the map dataset, and the map dataset may include a first map dataset and a second map dataset. The cloud server 110 may select the parking map of the parking lot corresponding to the parking map information from the first map dataset of the map dataset, based on the parking map information obtained by the recipient from the sharing access entry issued by a sharer; or according to the obtained current vehicle position of the recipient, select the parking map of the parking lot corresponding to the current vehicle position from the first map dataset and/or the second map dataset of the map dataset based on preset rules, where the parking maps in the first map dataset are the parking maps screened out based on the evaluation results of the parking maps uploaded by the sharer. The sharing access entry may include a shared link or a QR code, etc.

The vehicle 111 of the recipient is used to receive the parking map sent by the cloud server 110 and perform automatic driving according to the parking map.

The parking map sharing processing system 100 may also include a vehicle 112 of the collector and/or a vehicle 113 of the sharer.

The vehicle 112 of the collector is used to upload the learned parking map to the cloud server 110 to form the second map dataset in the map dataset of the cloud server 110. For example, after entering a certain parking lot, the vehicle 112 of the collector starts to learn a memory parking path. If the learning is completed, the parking map of the parking lot is recorded and generated. The parking map can include parking lot information, floors, and charging piles, elevator entrances, entrances and exits of a commercial building and other information. The vehicle 112 of the collector uploads the parking map to the cloud server 110 for sharing.

The vehicle 113 of the sharer is used to upload the learned parking map to the cloud server 110 to form the first map dataset in the map dataset of the cloud server 110. For example, after entering some parking lot, the vehicle 113 of the sharer starts to learn a memory parking path. If the learning is completed, the parking map of the parking lot is recorded and generated. The parking map can include parking lot information, floors, charging piles, elevator entrances, entrances and exits of a commercial building and other information. The vehicle 113 of the sharer uploads the parking map to the cloud server 110 for sharing.

Regarding the above device, the specific manner in which each module performs operations has been described in detail in the related method, and will not be described in detail herein.

FIG. 11 is a schematic structural diagram of the cloud server shown in the present application.

Referring to FIG. 11, the cloud server 1000 includes a memory 1010 and a processor 1020.

The processor 1020 may be a central processing unit (CPU), or other general-purpose processor, a digital signal processor (DSP), an application specific integrated circuit (ASIC), or a field programmable gate array (FPGA) or other programmable logic devices, discrete gate or transistor logic devices, discrete hardware components, etc. A general-purpose processor may be a microprocessor or the processor may be any conventional processor, etc.

The memory 1010 may include various types of storage units, such as a system memory, a read-only memory (ROM), and a permanent storage. The ROM can store static data or instructions required by the processor 1020 or other modules of the computer. The permanent storage may be readable and writable storage. The permanent storage may be a non-volatile storage device that does not lose stored instructions and data even when the computer is powered off. In some embodiments, the permanent storage device uses a large-capacity storage device (e.g. magnetic or optical disk, flash memory) as the permanent storage device. In other embodiments, the permanent storage device may be a removable storage device (e.g. floppy disk, optical drive). The system memory can be a readable and writable storage device or a volatile readable and writable storage device, such as dynamic random access memory. The system memory can store some or all of the instructions and data which the processor needs to run. In addition, the memory 1010 may include any combination of computer-readable storage medias, including various types of semiconductor memory chips (e.g. DRAM, SRAM, SDRAM, flash memory, programmable read-only memory). Magnetic disks, and/or optical disks can also be employed. In some embodiments, the memory 1010 may include a readable and/or writable removable storage device, such as a compact disc (CD), a read-only digital versatile disc (e.g. DVD-ROM, dual-layer DVD-ROM), a Read-only Blu-ray disc, an ultra-density disc, a flash memory card (such as a SD card, a min SD card, a Micro-SD card, etc.), a magnetic floppy disk, etc. The computer-readable storage media do not include carrier waves and transient electronic signals that are transmitted wirelessly or wired.

The memory 1010 stores executable codes. When the executable codes are processed by the processor 1020, the processor 1020 can be caused to execute part or all of the above-mentioned methods.

In addition, the method according to the present invention can also be implemented as a computer program or computer program product, which includes computer program code instructions for executing part or all of the steps in the above method of the present application.

Alternatively, the present invention may also be implemented as a computer-readable storage medium (or non-transitory machine-readable storage medium or machine-readable storage medium) with executable codes (or computer programs or computer instruction codes) stored thereon. When the executable codes (or computer programs or computer instruction codes) are executed by the processor of the electronic device (or server, etc.), the processor is caused to execute part or all of the respective steps of the above method according to the present application.

The various embodiments of the present application have been described above. The above description is illustrative, not exhaustive, and is not limited to the disclosed embodiments. Many modifications and variations will be apparent to those ordinarily skilled in the art without departing from the scope and spirit of the described embodiments. The terminology used herein is chosen to best explain the principles, practical applications, or improvements to the technology in the market of the various embodiments, or to enable other ordinarily skilled in the art to understand the embodiments disclosed herein.

## Claims

1. A parking map sharing processing method, **characterized in that**, it comprises:
selecting a parking map available to share from a map dataset based on preset conditions;
sending the selected parking map to a vehicle of a recipient so that the vehicle of the recipient automatically drives in accordance with the parking map.

2. The method as claimed in claim 1, **characterized in that**:
the parking map comprises semantic information, the semantic information comprises at least a starting position and an ending position, and the starting position is a parking starting position for pulling in or a parking starting position for pulling out.

3. The method as claimed in claim 1, **characterized in that**:
the semantic information of the parking map further comprises a floor of a parking building and positions of attribute objects, the attribute objects comprise one of or a combination of the following: charging piles, elevator entrances, retail shops or retail facilities, vehicle service shops and entrances and exits of a commercial building.

4. The method as claimed in claim 1, **characterized in that** the step of selecting the parking map that is available for sharing from the map dataset based on the preset conditions, comprises:
selecting the parking map that is available for sharing from a first map dataset and a second map dataset in the map dataset based on the preset conditions,
wherein the parking map in the first map dataset is uploaded after learning of the parking map is completed by a vehicle of a sharer, and the parking map in the second map dataset is uploaded after learning of the parking map is completed by the vehicle of the collector.

5. The method as claimed in claim 4, **characterized in that** the step of selecting the parking map that is available for sharing from the first map dataset and the second map dataset in the map dataset based on the preset conditions, comprises:
selecting the parking map of the parking lot corresponding to the parking map information from the first map dataset of the map dataset, based on the obtained parking map information obtained by the recipient from a sharing access entry issued by the sharer; or,
based on an obtained current vehicle position of the recipient, selecting a parking map of the parking lot corresponding to the current vehicle position from the first map dataset and/or the second map dataset of the map dataset in accordance with preset rules, wherein the parking map in the first map dataset is the parking map screened out based on an evaluation result of the parking maps uploaded by the sharer.

6. The method as claimed in claim 5, **characterized in that**, when the parking map in the first map dataset is the parking map screened out based on the evaluation result of the parking maps uploaded by the sharer, it comprises:
the parking map in the first map dataset is the parking map screened out after an evaluation is performed based on the evaluation and/or a number of downloads of the parking maps uploaded by the sharer.

7. The method as claimed in claim 5, **characterized in that** when based on the obtained current vehicle position of the recipient, selecting the parking map of the parking lot corresponding to the current vehicle position from the first map dataset and/or the second map dataset of the map dataset in accordance with preset rules, it comprises:
determining the parking lot corresponding to the current vehicle position based on the obtained current vehicle position of the recipient;
based on the parking lot corresponding to the current vehicle position, selecting the parking map of the parking lot corresponding to the current vehicle position from the parking map of the first map dataset and/or the second map dataset of the map dataset in accordance with the preset rules.

8. The method as claimed in claim 5, **characterized in that** based on the obtained parking map information obtained by the recipient from the sharing access entry issued by the sharer, selecting the parking map of the parking lot corresponding to the parking map information from the first map dataset of the map dataset, comprises:
obtaining the parking map information obtained by the recipient from the sharing access entry issued by the sharer, wherein the recipient obtains the parking map information shared by the sharer from the sharing access entry issued by the sharer, after learning of the parking map is completed by the vehicle of the sharer;
based on the obtained parking map information obtained by the recipient from the sharing access entry issued by the sharer, selecting the parking map of the parking lot corresponding to the parking map information from the first map dataset of the map dataset.

9. The method as claimed in claim 5 or 7, **characterized in that**, the preset rules comprise:
when the parking maps in the first map dataset and the second map dataset comprise the same parking lot entrance, the parking map in the second map dataset is selected; or
when the parking maps in the first map dataset and the second map dataset comprise different parking maps corresponding to the same parking lot entrance, the parking map is sequentially selected in accordance with a priority order of the predetermined attribute objects in the parking map; or
when the parking maps in the first map dataset and the second map dataset comprise different parking maps corresponding to the same predetermined attribute objects, the parking map with a short parking path is selected; or
the parking map of the parking lot is selected, when the distance between said parking lot and the current vehicle position of the recipient is less than or equal to a preset distance threshold.

10. A parking map sharing processing device, **characterized in that**, it comprises:
a selection module, for selecting a parking map that is available for sharing from a map dataset based on preset conditions;
a sending module, for sending the parking map selected by the selection module to a vehicle of a recipient, so that the vehicle of the recipient automatically drives in accordance with the parking map.

11. The device as claimed in claim 10, **characterized in that**, the device further comprises:
a storage module, for storing the map dataset, which comprises a first map dataset and a second map dataset;
wherein the parking map in the first map dataset is uploaded after learning of the parking map is completed by a vehicle of a sharer, and the parking map in the second map dataset is uploaded after learning of the parking map is completed by a vehicle of a collector.

12. A parking map sharing processing system, **characterized in that**, it comprises:
a cloud server, for selecting a parking map that is available for sharing from a map dataset based on preset conditions, and sending the selected parking map to a vehicle of a recipient;
the vehicle of a recipient, for receiving the parking map which is sent by the cloud server and performing automatically driving in accordance with the parking map.

13. The system as claimed in claim 12, **characterized in that** the system further comprises a vehicle of a collector and/or a vehicle of a sharer;
the vehicle of the collector is used for uploading the learned parking map to the cloud server to form the second map dataset in the map dataset of the cloud server;
the vehicle of the sharer is used for uploading the learned parking map to the cloud server to form the first map dataset in the map dataset of the cloud server.

14. A cloud server, **characterized in that**, it comprises:
a processor; and
a memory, having executable codes stored thereon, when the executable codes are executed by the processor, configured to enable the processor to perform the method of any one of claims 1-9.

15. A computer-readable storage medium, having executable codes stored thereon; when the executable codes are executed by the processor of an electronic apparatus, configured to enable the processor to perform the method of any one of claims 1-9.
